# EUROPEAN PATENT APPLICATION

(11) **EP 0 889 604 A2**
(43) Date of publication of application: **07.01.1999**
(21) Application number: 98305014.7
(22) Date of filing: 25.06.1998
(51) Int. Cl.: H04B 7/185

(54) **Interference mitigation for user terminal in satellite telecommunication system**

(30) Priority: 01.07.1997 GB 9713776
(71) Applicant: ICO Services Ltd., London W6 9BN (GB)
(72) Inventor: Grayson, Mark, London, W4 2QT (GB); Chambers, Charles, Great Shelford, Cambridge CB2 (GB)
(74) Representative: Read, Matthew Charles

(57) **Abstract**

A user terminal 16 on the surface of the earth 14 communicates with a satellite 10 10' for telephone calls. When setting-up a call, the user terminal 16 listens to broadcasts from all radio sources 10 10' 20 20' and measures the strength. In addition to a measured strength, the broadcasts also include indication of the satellite 10 10' power level, the local level of interference at the satellite 10 10', and other factors which will determine how much power the user terminal 16 needs to use when requesting service. The user terminal 16 works our which source 10 10' 20 20' will require least power for a request for service and directs the request for service to that source. If the required power exceeds the maximum the user terminal can provide, the maximum user terminal 16 power is used. If the required power exceeds a predetermined limit, the user terminal power is restricted to that predetermined limit.

## Description

The present invention relates to mobile communications where a radio telephone handset communicates with a telephone network by two-way exchange of radio signals between the handset and a transceiver which can take the form of a terrestrial base station or a satellite.

When a radio telephone handset wishes to initiate communication, its first act is to send out a general signal, to be picked up by an appropriately selected transceiver, in the form of a communications satellite or base station, whereby the telephone network becomes aware of the request, made by the handset, and is able to respond thereto. A problem arises from the overlap of coverage of base stations and satellites. Each has an area in common with adjacent base stations or satellites where, if a handset sends out a service request, more than one base station or satellite will receive the request. Equally, such service requests must be made on a single frequency (channel) or on a small, predetermined set of channels. A handset which is best positioned to interact with one base station or satellite is quite capable of raising a request with several, or of interfering with requests from other handsets in other places. Equally, reciprocal interference between handsets may be possible.

The dilemma deepens when it is realised that the request for service must be heard to enable service provision. Handsets suffer from signal attenuation due to obstructions, being within buildings, being remote from the base station or satellite, and so on. Once a call is established, automatic transmission power control can take place in a closed-loop manner to limit the effect of interference suffered by the handset. However, to set up the call, in the request for service, it is necessary to increase the probability of successful reception by using considerable signal margin and potentially risk excess system interference.

So, how is it possible for a request for service to provide a high probability of being heard while, at the same time, avoiding excess system interference?

A further problem exists. The satellite or base station may temporarily be suffering higher than expected interference levels, not only from handsets but from solar activity, urban electrical noise, other radio sources, and so on. This means that the request for service must be sent at a level able to overcome the unexpected increased noise, while still avoiding undue interference.

So the problem becomes: how is it possible for a request for service to provide a high probability of being heard, while the recipient may be subject to radio interference, and without the request for service itself causing undue interference.

EP 0741467 discloses a transceiver which measures its local interference on an extended statistical basis to characterize what it in general terms expects to see. This suffers from the disadvantage that the user terminal has to put out power in anticipation of a possible but not necessarily present interference, which is wasteful of user terminal power.

The present invention seeks to provide a simple alternative solution.

The present invention consists in a user terminal for use in a radio communications system wherein a transceiver is operative to provide a signal, receivable by said user terminal, said signal providing information concerning the instant level of radio interference experienced at said transceiver and information concerning the instant transmission power level of said signal, said user terminal, in response thereto, being operative to measure the strength of said signal to calculate the path loss between said transceiver and said user terminal to adjust the power of a subsequent transmission to the transceiver to an instant power to compensate both for path losses between said transceiver and said user terminal and to compensate for said instant level of radio interference at said transceiver.

The use of the instant level of interference means that the transceiver only puts out greater power when the interference is actually present at the transceiver instead of putting out power in anticipation of possible but not necessarily present interference, as in the prior art, thereby saving user terminal power.

Further, the present invention provides a user terminal, wherein, in the event that the required power of the subsequent transmission by the user terminal exceeds the maximum power available in the user terminal, the user terminal is operative to make subsequent transmission at the maximum power.

Even further, the present invention provides a user terminal wherein, in the event that the required power of the subsequent transmission exceeds a predetermined limit, the user terminal is operative to make the subsequent transmission at the predetermined limit of power.

Yet further, the present invention provides a user terminal, wherein the required power includes a margin above the minimum power for the transceiver to receive the subsequent transmission.

Still further, the invention provides a user terminal wherein the signal is one of a plurality of signals from a plurality of transceivers, and wherein the user terminal is operative to elect one of the plurality of transceivers to which to send the subsequent transmission.

Even further, the invention provides a user terminal wherein the user terminal is operative to elect that source which has the minimum required power.

Yet further, the invention provides a user terminal wherein each of the plurality of signals includes information on the availability of its respective transceiver to receive the subsequent transmission, and wherein the user terminal is operative to include the availability when assessing each transceiver to be elected for receipt of the subsequent transmission.

The invention, yet further, provides a user terminal wherein the transceiver, or the plurality of transceivers, is a terrestrial cellular telephone base station or a plurality of terrestrial cellular telephone base stations.

Still further, the invention provides a user terminal wherein the transceiver, or the plurality of transceivers, are comprised in one or more communications satellites.

Yet further, the invention provides that, when the transceiver or transceivers are comprised in one or more communications satellites, the plurality of transceivers include a plurality of spot beams, each signal from each of the plurality of spot beams including an identifier for that respective spot beam, the user terminal being operative to decode the identifier for each of the spot beams, being operative use the spot beam identifier to assess the altitude of the satellite wherefrom the each spot beam originates, and being operative to include the altitude when assessing each source to be elected for receipt of the subsequent transmission.

Finally, the invention provides that the signal, or each of the plurality of signals, is a broadcast signal, and the subsequent transmission is a request for service.

The invention is further described, by way of an exemplary embodiment, by the following description, taken in conjunction with the appended drawings, in which:
Figure 1 shows the general satellite communications environment within which the preferred embodiment of the invention is set.
Figure 2 shows a pattern of spot beams, on the surface of the earth, originating from the satellite(s) of figure 1.
Figure 3 is a flow chart showing the activities of the combined satellite(s) and earth station of figure 1 when acting according to the preferred embodiment of the present invention.
Figure 4 is a flow chart showing the activity of the user terminal of figure 1 when acting according to the preferred embodiment of the present invention;
Figure 5 is a flow chart, being an expansion of a portion of the flow chart of figure 4, the better to illustrate the manner in which transmitter power is scaled in the user terminal for the subsequent transmission; and
Figure 6 is a flowchart showing the manner in which the user terminal selects only a broadcast message (BCCH) from a cell or satellite, for an attempt at acquisition, which is not blocked either by being too low on the horizon and likely to disappear too early for progress of a call, and is not in crisis due to a local shortage of terrestrial connections or a shortage of radio channels to accept a call.

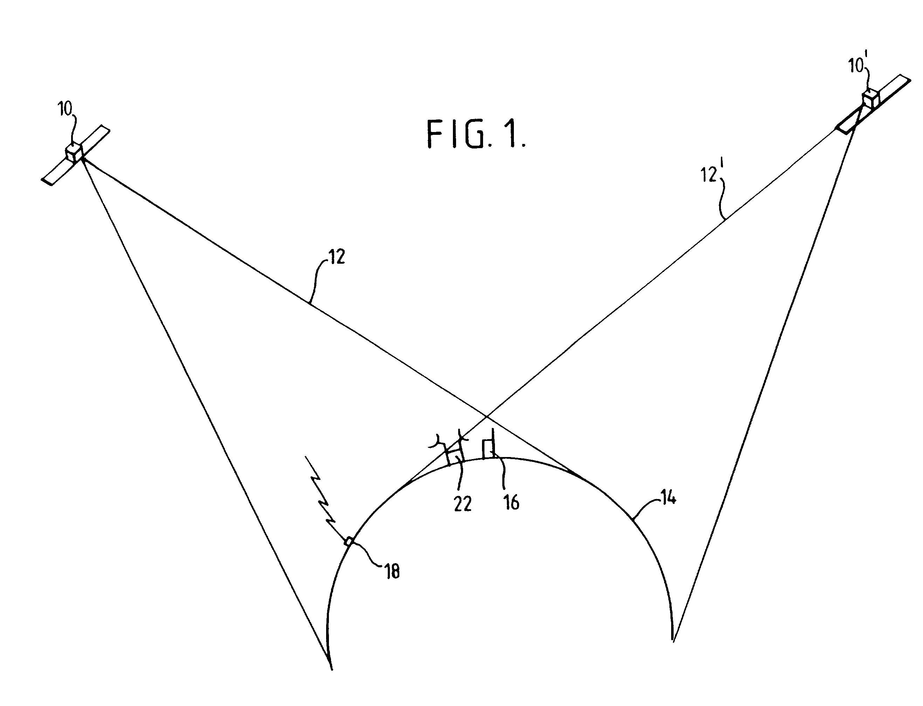

Figure 1 shows the problem relating to handsets signalling for a request for service.

Communications satellites 10 10' provide respective cones of radio coverage 12 12' on the surface of the earth 14. A user terminal 16 (handset), on the surface of the earth 14, falls within the cones of radio coverage 12 12' of both satellites 10 10'. A request for service, from the user terminal 16, would be heard by both satellites 10 10'. This would not be a problem if the user terminal 16 were unique. Unfortunately, the user terminal 16 is one of very many terminals 16 all of whom are in a position to compete for service from the satellites 10 10'. They can interfere with each other.

There may, in addition, be sources of radio interference 18 which can selectively affect one satellite 10 without affecting the other 10'. Thus, one satellite 10 would require an enhanced power level, compared to the other 10', while the source of interference on the request channel (known as the Random Access Channel, or RACH for short) is active.

Depending upon the position of a satellite 10 10' relative to the user terminal 16, the radio signal path attenuation will vary. In the embodiment of the present invention, the satellites 10 10' are in a circular orbit approximately 10,355 kilometres above the earth 14. In this particular orbit, If the satellite 10 10' is low on the horizon, the propagation attenuation is around 3 decibels more that if the satellite 10 10' is immediately above the user terminal 16. Other heights of orbit, also applicable to the present invention, will have different characteristics.

Finally, obstructions, such as trees or building, can provide a further source of propagation path attenuation. The obstruction may be temporary, in the case of a moving user terminal 16 or a moving obstruction, or permanent, as in the case of a user terminal inside or near a building.

The preferred embodiment of the invention has the satellites 10 10' orbiting at 10,355 Kilometres above the surface of the earth in two orthogonal orbits, each inclined at 45 degrees to the equator to provide whole-earth coverage from ten satellites 10 10', five equispaced around each orbit. This is not a restriction on the scope of the invention, which is equally applicable to any communications satellite 10 10' at any orbital height above the earth 14 or to any spaced array of terrestrial base stations such as might be used with terrestrial cellular telephones.

An earth station 22, on the surface of the earth 14, exchanges messages with the satellites 10 10' and participates in the general communications activities between the user terminal 16, the satellite 10 10' and any other communications facility with which the user terminal 16 might wish to make contact. The earth station 22 controls the communications satellite's 10 10' communication activities, provides signals for the communications satellites 10 10' to send, and monitors signals, received from whatever source, by the communications satellites 10 10'. The activities, hereinafter described as being enacted by the earth station, may equally well be performed by the satellites 10 10' themselves. The precise relationship between the elements 16. 10 10' 22 hereinafter described are merely by way of example for the best working of the invention according to the embodiment shown.

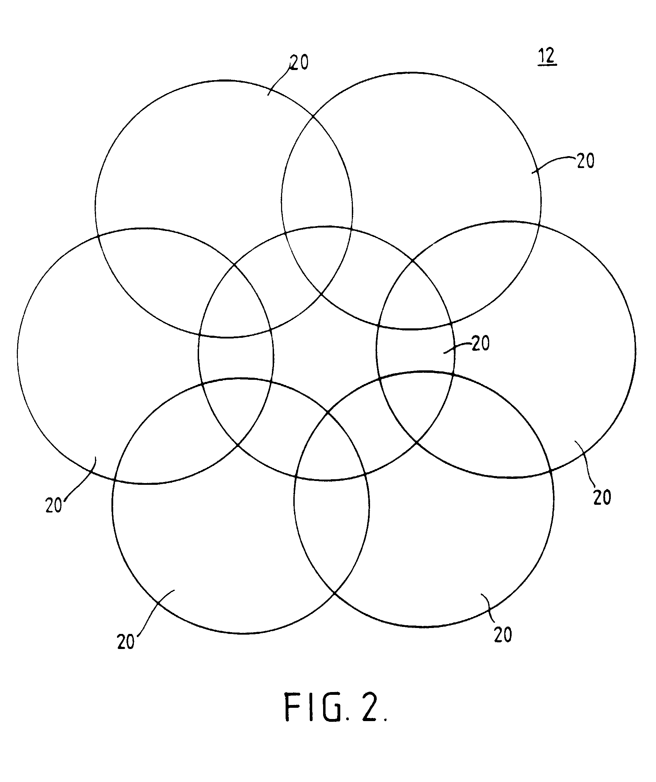

Figure 2 shows how the cones of radio coverage 12 12' are divided into a plurality of spot beams 20. Each spot beam 20 carries a separate communications load from any other spot beam 20 in the cone of radio coverage 12 12'. Only a few spot beams 20 are here shown. Suffice to say that the entire cone of radio coverage 12 12' is filled with spot beams 20 in a regular array, or in an irregular array so that small spot beams 20 fall over busy areas and large spot beams 20 over relatively empty areas, so that, nominally, each spot beam 20 covers its own nominated portion of the surface of the earth 14. In the preferred embodiment of the invention the cones 12 12' of radio coverage comprise 163 spot beams. This is not restrictive on the present invention, which is also applicable to just one beam in the entire cone of radio coverage. The example given is merely one example of the applicability of the invention.

Now, the spot beams 20 overlap. While every endeavour is made to ensure that the overlap is minimised, the edge of the field for each spot beam coverage is not sharp. Some overlap is inevitable, since no point on the surface of the earth 14, within the cone 12 12' of radio coverage, must be left uncovered. To accommodate possible variations in signal or beam pattern, the spot beams 20 must be slightly oversized compared to minimum cover. In figure 2 it is plain that some areas are covered by only one spot beam 20 per satellite 10 10' while other areas are within the nominated cover of two or even three spot beams 20 per satellite 10 10'. In fact, this situation is idealised. The reality is that there is no perfect isolation between spot beams 20 and a signal, sent from an area nominated for a particular spot beam will be received, to some extent, by all of the spot beams 20 in the cone 12 12' of radio cover.

Returning briefly to figure 1, it is also apparent that the part of the surface of the earth 14 where the user terminal 16 is situated is covered by a set of spot beams 20 from one satellite 10 and covered by another set of spot beams 20 from another satellite 10'. The situation can become more confused where more that two satellites 10 10'; overlap, and, in the system of the preferred embodiment, on occasions, portions of the surface of the earth can be within the cones 12 12' of radio coverage of up to four satellites giving certain portions of the surface of the earth 14 nominated cover from twelve (or more) spot beams 20 and the possibility of a signal, originating from a particular point on the surface of the earth 14, being receivable in six hundred and fifty-two spot beams 20. These figures are given only by way of an example. illustrative of the problem which the present invention seeks to solve.

In trying to access for service, the request signal from the user terminal 16 can be heard by up to six hundred and fifty-two spot beams 20 in the worst case. The situation is alleviated by separating the RACH channels for the spot beams 20 using frequency separation, antenna polarisation and handedness of circularly polarised radio signal separation (where possible), time division separation, code division separation, and any other means whereby one spot beam may improve its reception isolation from the others 20. Inevitably, because of limited numbers of time slots, frequencies and codes, some duplication must exist within each cone 12 12' of radio coverage and, in particular, between satellites 10 10' so that what appears to be a reasonable isolation in fact, is far from perfect. This creates the possibility of the request signal assisting in interfering with request signals from other user terminals. Equally, requests from other user terminals 16 can interfere with the request from the user terminal 16 shown in figure 1.

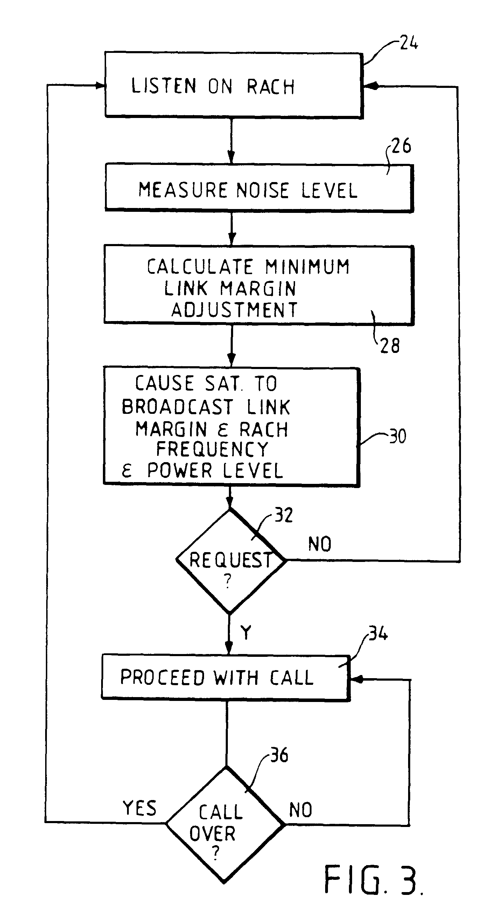

Figures 1 and 2 show the environment appropriate to the present invention. Figure 3 shows the activities of the earth station 22 in the present invention.

Each spot beam 20 has a random access channel (RACH). The RACH is designated as being on a predetermined frequency. Other spot beams may share the same RACH frequency. Equally, each spot beam 20 has a predetermined broadcast channel (BCCH) where messages, at predetermined intervals, are sent for reception by all user terminals 16. Because each user terminal transmission may be received in multiple spot beams 20, there can be a problem.

In a first operation 24, the earth station 22 listens to the RACH channel of a particular spot beam 20. If no signal from a user terminal 16 is present, the earth station 22 monitors the noise level at the satellite 10 10' and makes a measurement in a second operation 26. Interfering signals can come from any source, including incoherent transmissions from user terminals 16, sources of interference 18, or even from solar or cosmic sources. It does not, particularly matter from where. The earth station 22 has an expectation of how much noise, generally, without interference, deriving from internal thermal or antenna thermal sources, it ought to expect. If the noise level is different, a multiplying factor, in decibels, is calculated in a third operation 28.This is the link margin adjustment and represents the minimum alteration needed to ensure reception on the RACH. If, for some reason, the noise level is lower than usual, the link margin adjustment is a negative number of decibels and, theoretically, would allow the user terminal 16 to use less power. If the noise level is higher than expected, the link margin adjustment is a positive number of decibels and would require the user terminal 16 to use more power.

Having calculated the link margin adjustment, the earth station 22 then provides the information to be broadcast by the satellites 10 10' on the BCCH in a fourth operation 30. In addition to the link margin adjustment, the broadcast also includes information concerning the frequency to be used by the RACH for each spot beam 20 and the power the satellite 10 10' is actually using for the transmission.

If a first test 32 does not detect a request for service on the RACH, the earth station returns to the first operation 24. If the first test 32 detects a request, the earth station 22 uses a fifth operation 34 to proceed with the call until a second test 36 determines that the call is over and returns control to the first operation 24.

While the example given describes the activities taking place at the earth station 22 or base station, it is not a requirement that the calculation, transmission control and data gathering be located at the earth station 22 . The formulation of the broadcast information can be centralised at a facility which gathers data from many satellite 10 10 /earth station 22 combinations, or from many base stations. The only requirement, for the present invention, is that the satellite 10 10' or base station sends the necessary signals, and measures (or has measured) the necessary interference levels. Any apparatus or method for achieving this purpose will suffice.

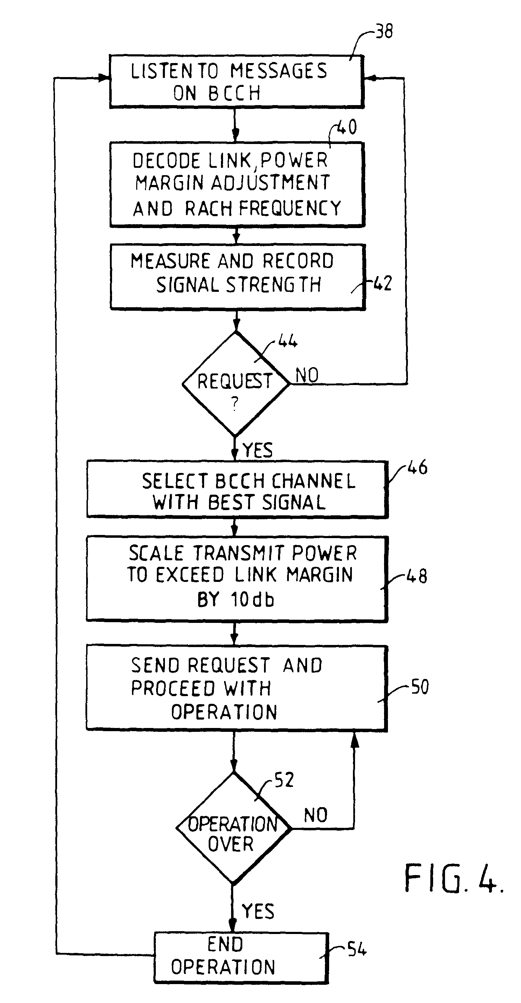

Figure 4 shows the activity of the user terminal 16 in the embodiment of the invention.

When the user terminal 16 is in stand-by mode of operation, that is, not in the process of making or initiating a call, a sixth operation 38 has the user terminal 16 listening to the BCCH for any messages. If a message is received, a seventh operation 40 decodes the link margin adjustment, the indicated satellite transmission power, and the RACH channel frequency, as transmitted by the earth station 22 in the fourth operation 30 of figure 3. An eight operation 42 then measures the strength of the signal received on the BCCH, and calculates a path loss based on the expected signal strength which would be expected at the indicated power level of the satellite 10 10' transmission, made known by the fourth operation 30 of figure 3. The user terminal 16 also records the result for that spot beam 20. Recording can involve an instant record, where the most recent result for that spot beam 20 is used to replace the previous record, or involve a more complex operation where a running average for that spot beam is recorded.

A third test 44 detects if a request for service is required. The need for service can arise from the owner of the user terminal requiring a telephone connection, from a periodic need for the user terminal 16, autonomously to re-register, from a need to re-register on moving from spot beam 20 to spot beam 20, responding to a high penetration notification (used when the user terminal is radio isolated and out of normal service) and a host of other reasons. It does not concern the present invention exactly why the user terminal should wish to make contact with an earth station 22, simply that it does.

If no request for service is required, the third test 44 returns control to the sixth operation 38. If a request for service exists, control is passed to a ninth operation 46 where the user terminal 16 selects the BCCH channel, and hence the spot beam 20 20' which had the best signal in its broadcasts thus giving the highest probability of the user terminal 16 making a successful request for service. That signal can be selected which, given the strength of its broadcasts and its local RACH noise level, as transmitted over the BCCH, would require least power for reception. Thus, a very strong signal with a very noisy RACH might be less desirable than a weaker signal with less local RACH noise. This ensures that the user terminal 16 will be able to communicate with the earth station 22, via the satellite 10 10', using the least power since the sum of propagation path losses and noise or interference margin degradation are least. Equally, it is better to use a beam from a satellite with high elevation than a beam from a satellite 10 10' which is low on the horizon, since propagation loss is less to an overhead satellite 10 10' and the probability of an established call being interrupted because of ground obstruction is less for an overhead satellite. Each spot beam 20 20' has its own identity, broadcast on the BCCH. Each spot beam 20 20' subtends a particular angle relative to the surface of the earth 14. Thus, by knowing the identity of a spot beam 20 20', it is possible to know whether it originates from a high elevation or a low elevation satellite. Equally, it is possible to know whether or not the angle of elevation of the satellite 10 10' is increasing or decreasing. The user terminal 16 knows, from an internal table, what is the elevation for each spot beam 20 20' and can use that information in the selection of a BCCH (and hence spot beam 20 20'). Low elevation spot beams which are getting lower will be rejected, since call duration would be compromised as the satellite 10 10' disappeared below the minimum operational elevation.

Certain satellites 10 10' may be operating with an earth station 22 which has a problem with availability of terrestrial line capacity. It is pointless to initiate a call with a satellite 10 10' or via a spot beam 20 20' where a scarcity of terrestrial lines will reduce the probability of the call being connected. Each spot beam 20 20' has a limited number of call channel frequencies which it can allocate. Some spot beams 20 20' will be busy, while others will be relatively empty of traffic. It is pointless to direct a request for service to a spot beam 20 20' whose call channels are already full. To overcome these problems, the earth station 22, via the satellite 10 10', using the BCCH on each spot beam 20 20', transmits an indication of the terrestrial connection capacity and the call channel availability. The user terminal 16 decodes this information and rejects any spot beam 20 20' which has impaired call candling and connecting capacity.

The user terminal 16, in a tenth operation 48, scales its transmitter power to ensure a service request is received, at the selected satellite, with a predetermined excess margin, here chosen, but not restricted to, 10 decibels, above the minimum margin required for service. Any excess margin is within the scope of the invention, and it is for the designer of a particular embodiment to select an excess margin which fits his needs and to transmit the information as a system parameter to enable configuration of the system. If the expected user terminal 16 transmission power is more than the maximum that the user terminal 16 can provide, the user terminal simply uses its maximum power to give the best hope of reception.

An eleventh operation 50 then sends the request at the power level determined by the tenth operation 48 and the operation (e.g. registration) or call is proceeded with, at a closed loop power control level, as is already known in the art, until a fourth test 52 determines that the user terminal instant operation is over and returns control to the sixth operation 38 via a twelfth operation 54 which terminates the call, re-registration, or whatever was the cause of the need for a request for service.

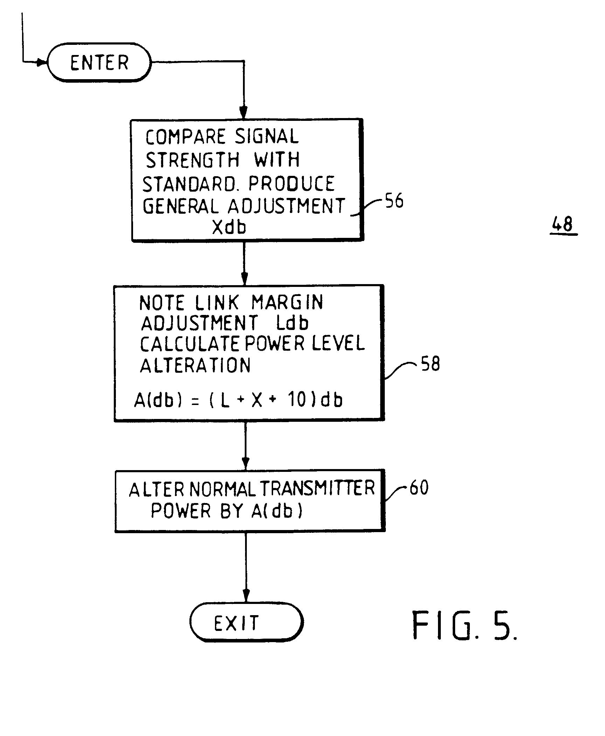

Figure 5 is an expansion of the tenth operation 48 of figure 4. Entry is to a thirteen operation 56 where the user terminal 16 compares the signal strength from the BCCH with an expected norm. As earlier stated, the norm is based on the indication of power used, by the satellite. At a certain indicated power level, a certain signal strength is expected. If the BCCH signal is greater that the expected norm, a general adjustment (X) is calculated which is a negative number of decibels. If the BCCH signal is below the expected norm, the general adjustment X is a positive number of decibels. Control then passes to a fourteenth operation 58 where the power alteration (A decibels) is calculated as the sum of the general adjustment X, the excess margin (here chosen as 10 decibels), and the link margin adjustment L, received from the BCCH in the broadcast message.

In the description hereinbefore and hereinafter, a margin is the amount, over a threshold of intelligibility, which a signal provides. In general terms, the maximum return signal margin, experienced by the satellite 10 10' when receiving a signal from the user terminal 16, is the difference between the maximum signal margin which the user terminal can provide at the satellite 10 10' when in the most ideal conditions, the maximum signal margin being reduced by path losses. The path losses include distance effects, shielding by trees and buildings, atmospheric conditions, antenna inefficiencies, and, indeed, everything that can contribute to a change in signal strength. In particular, the path losses also include any deficiencies in the antenna of the user terminal 16 which, as will be seen, are reflected in a compensating increase of power when the user terminal 16 transmits. At manufacture of the user terminal 16, the sensitivity of the user terminal 16 is measured or assumed and the measured or assumed sensitivity stored within the user terminal 16 so that the signal from the BCCH can properly be assessed. Again, as a benefit, if the antenna on the satellite 10 10' is in any way over efficient or under efficient, compensation therefore by the user terminal 16 transmission power is automatic.

A fifteenth operation 60 then scales the output power, up or down from a norm, by the calculated power alteration (A decibels) found in the fourteenth operation. If the expected transmission power from the user terminal 16 exceeds the maximum the user terminal 16 can provide, the user terminal simply uses the maximum power available. Each make and style of user terminal is aware of its maximum power capability, indicated either by storage of information on manufacture and/or testing, or, alternatively, by the user terminal 16 sending a message at a known or indicated power level to the satellite 10 10'/earth station 22 and the earth station sending back a signal report which allows the user terminal 16 to adjust its estimation of power output.

If the signal, transmitted from the user terminal 16, is likely to exceed a predetermined signal strength at the satellite, the predetermined signal strength being the maximum which can be tolerated at the satellite 10 10' without risk to other spot beams 20 20', the output power of the terminal 16 is limited to that power which will produce that predetermined signal strength.

Within the present invention, the spot beams can be replaced by terrestrial base stations, the base stations behaving the same way as the combination of the earth station 22 and the satellites 10 10', to achieve exactly the same effect in an entirely terrestrial system.

While the invention has been described, generally, in terms of setting up a call using RACH and BCCH signals, (i.e. using a knowledge of the channel from the satellite 10 10' or base station to enable approximate power control of the channel from the user terminal 16 to the satellite 10 10' or the base station to provide sufficient margin to ensure a high probability reception without excessive interference), the apparatus and method is applicable in any system where a transmission is receivable from a base station or satellite 10 10'and where the user terminal 16 must respond. All that is necessary is for the base station or satellite 10 10' to send out the necessary information on whatever channel or by whatever means is appropriate to an instant operation and for the user terminal 16 to respond as indicated to select its transmission power level. In particular, where it is known, in advance, what power output the base station or satellite 10 10' is using, there is no need for the base station or satellite 10 10' to send an indication of power level. Where it is known in advance what frequencies are to be used, there is no requirement for the satellite 10 10' or base station to provide indication of frequency.

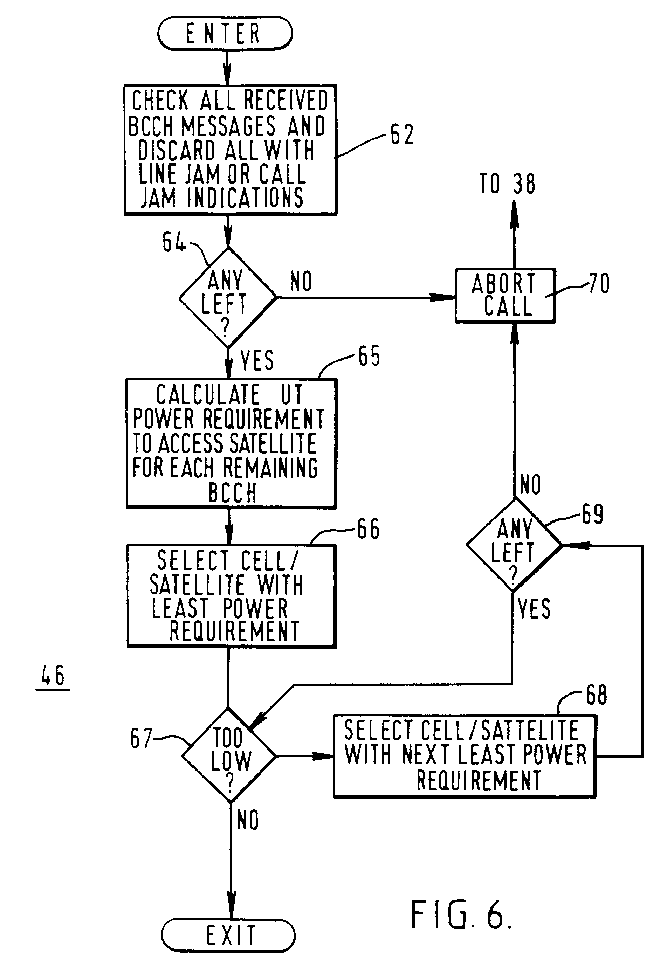

Finally, Figure 6 is an expansion of the ninth operation 46, otherwise shown in figure 4, where the user terminal 16 selects the BCCH channel with the best signal.

A sixteenth operation 62 checks the information received on all of the audible BCCH messages and discards any that have an indication that there is a line jam (where there are no available telephone lines from the earth station 22 with which the satellite 10 10' is in contact, thereby rendering the ability for the user terminal 16 to place a call, impossible), and also discards any that contain an indication of a call jam (where the particular satellite 10 10' has no remaining radio channels to accept a call, all channels, for now, being occupied).

Control then passes to a fifth test 64 which checks to see if there are any received BCCH messages after the others, in the sixteenth operation 62, which have been discarded on the basis of the impossibility of the user terminal 16 being capable of making a call.
If the fifth test 64 detects that there are some remaining BCCH messages which indicate that a placement of a call is possible, control passes to a seventeenth operation 65 where the user terminal 16 calculates the minimum required power, for each of the residual BCCH messages, required to achieve the minimum signal to noise ratio at the satellite 10 10' if a call is placed by the user terminal 16.

Having worked out the required user terminal 16 transmission power requirements, the seventeenth operation 65 passes control to an eighteenth operation 66 where that BCCH signal, with the least user terminal 16 transmission requirement, is selected for further analysis.

The eighteenth operation 66 then passes control to a sixth test 67 which, as earlier described, looks at the identity of the BCCH to see if it originates from a satellite which is soon to disappear over the horizon and be unavailable to the user terminal for the duration of a call (in other words, if the BCCH signal originates from a satellite which is too low on the horizon and descending "out of sight").

If the eighteenth test 67 detects no such restriction, the routine exits to the tenth operation 48, as indicated in figure 4.

If the sixth 67 detects that the BCCH under scrutiny does originate from a satellite 10 10' which is about to disappear before a call can be completed, control passes to a nineteenth operation 68 which selects that BCCH message with the next least user terminal 16 transmission power requirement.

It may be that there are no more BCCH transmissions to test. Accordingly, the nineteenth operation 68 passes control to a seventh test 69 which checks to see if there are any remaining BCCH signals to evaluate.

If the seventh test 69 detects remaining BCCH signals to evaluate, it passes control back to the sixth test 67. The sixth test 67, the nineteenth operation 68, and the seventh test 69, thus co-operate to run down the list of the remaining BCCH signals until one is found by the sixth test 67 which is not originating from a satellite which is too low and about to disappear below the horizon, or until the seventh test 69 detects that there are no further BCCH signals to evaluate.

Should the fifth test 64 detect that there are no further possible BCCH signals to evaluate, or should the seventh test 69 detect that there are no BCCH signals, not blocked by line jams or call jams but otherwise blocked by the originating satellite 10 10' being too low and about to disappear, both tests 69 64 pass control to a twentieth operation 70 which aborts the call attempt in the user terminal 16 and passes control (in a path not shown in figure 4) back to the ninth operation 46 of figure 4.

In the manner described with reference to figure 6, the user terminal 16 avoids causing undue interference by avoiding making call attempts where no call is possible or where the duration of a placed call would be unsatisfactorily short.

The activities of the flow chart of figure 6 are shown in a specific order simply as an example of the manner in which the invention can be implemented. Those, skilled in the art, will be aware that the specific order is not restrictive, and the activities, hereinbefore ascribed to figure 6, can be accomplished in any order, provided only that the final function is achieved.

## Claims

1. A user terminal for use in a radio communications system wherein a transceiver is operative to provide a signal, receivable by said user terminal, said signal providing information concerning the instant level of radio interference experienced at said transceiver and information concerning the instant transmission power level of said signal, said user terminal, in response thereto, being operative to measure the strength of said signal to calculate the path loss between said transceiver and said user terminal to adjust the power of a subsequent transmission to the transceiver to an instant power to compensate both for path losses between said transceiver and said user terminal and to compensate for said instant level of radio interference at said transceiver.

2. A user terminal, according to claim 1, wherein, in the event that the required power of said subsequent transmission by said user terminal exceeds the maximum power available in said user terminal, said user terminal is operative to make subsequent transmission at said maximum power.

3. A user terminal, according to any of the preceding claims, wherein, in the event that the required power of said subsequent transmission exceeds a predetermined limit, said user terminal is operative to make said subsequent transmission at said predetermined limit of power.

4. A user terminal, according to any of the preceding claims, wherein said required power includes a margin above the minimum power for said transceiver to receive said subsequent transmission.

5. A user terminal, according to any of the preceding claims, wherein said signal is one of a plurality of signals from a plurality of transceivers, and wherein said user terminal is operative to elect one of said plurality of transceivers to which to send said subsequent transmission.

6. A user terminal according to claim 5 wherein said user terminal is operative to elect that source which has the minimum required power.

7. A user terminal, according to claim 5, wherein each of said plurality of signals includes information on the availability of its respective transceiver to receive said subsequent transmission, and wherein said user terminal is operative to include said availability when assessing each transceiver to be elected for receipt of said subsequent transmission.

8. A user terminal, according to any of the preceding claims, wherein said transceiver, or said plurality of transceivers, is a terrestrial cellular telephone base station or a plurality of terrestrial cellular telephone base stations.

9. A user terminal, according to any of the preceding claims, wherein said transceiver, or said plurality of transceivers, are comprised in one or more communications satellites.

10. A user terminal according to claim 9, when dependent upon claim 5, wherein said plurality of transceivers include a plurality of spot beams, each signal from each of said plurality of spot beams including an identifier for that respective spot beam, said user terminal being operative to decode said identifier for each of said spot beams, being operative use the spot beam identifier to assess the altitude of the satellite wherefrom said each spot beam originates, and being operative to include said altitude when assessing each source to be elected for receipt of said subsequent transmission.

11. A user terminal, according to any of the preceding claims, wherein said signal, or each of said plurality of signals, is a broadcast signal, and wherein said subsequent transmission is a request for service.

12. A method of operating an earth station in a satellite telecommunications system for providing telecommunications service to a remote user terminal, comprising instructing a satellite to transmit a signal, receivable by said user terminal, said signal providing information concerning the instant level of radio interference experienced at said transceiver and information concerning the instant transmission power level of said signal, whereby said user terminal, in response thereto, can measure the strength of said signal to calculate the path loss between said transceiver and said user terminal to adjust the power of a subsequent transmission to the transceiver to an instant power to compensate both for path losses between said transceiver and said user terminal and to compensate for said instant level of radio interference at said transceiver.
